# EUROPÄISCHE PATENTSCHRIFT

(11) **EP 3 977 246 B1**
(45) Veröffentlichungstag und Bekanntmachung des Hinweises auf die Patenterteilung: **17.09.2025**
(21) Anmeldenummer: 20725437.6
(22) Anmeldetag: 27.04.2020
(51) Int. Cl.: G06F 3/041, B60R 16/037, G06F 3/0484, G06F 3/0488

(54) **VERFAHREN ZUR PROGRAMMIERUNG EINES BEDIENMODULS FÜR EIN FAHRZEUG UND ENTSPRECHENDES BEDIENMODUL**
METHOD FOR PROGRAMMING AN OPERATING MODULE FOR A VEHICLE AND CORRESPONDING OPERATING MODULE
PROCÉDÉ DE PROGRAMMATION D'UN MODULE DE COMMANDE POUR UN VÉHICULE ET MODULE DE COMMANDE CORRESPONDANT

(30) Priorität: 27.05.2019 DE 102019207750
(43) Veröffentlichungstag der Anmeldung: 06.04.2022
(73) Patentinhaber: Volkswagen AG, 38440 Wolfsburg (DE)
(72) Erfinder: BORK, Simon, 38547 Calberlah (DE); OONG, Alexander, 40477 Düsseldorf (DE); PETTER, Niels, 45133 Essen (DE)
(86) Internationale Anmeldenummer: PCT/EP2020/061647
(87) Internationale Veröffentlichungsnummer: WO 2020/239342

(56) Entgegenhaltungen:
- DE-A1- 102009 026 408
- DE-A1- 102009 055 221
- US-A1- 2011 082 615
- US-A1- 2018 067 634

## Beschreibung

Die vorliegende Erfindung betrifft ein Verfahren zur Programmierung eines Bedienmoduls für ein Fahrzeug. Die vorliegende Erfindung betrifft weiterhin ein für das Verfahren geeignetes Bedienmodul.

Die steigende Anzahl unterschiedlicher Funktionen und Komponenten im Fahrzeug sowie deren immer weiter zunehmende Komplexität hat zu einer Vielzahl von Bedienelementen geführt. Neben neuen Bedienkonzepten, wie beispielsweise Sprach- oder Gestensteuerungen, kommen weiterhin mechanische Bedienelemente in Form von Bedienknöpfen, Tasten und Schalter zum Einsatz.

Die Vielzahl unterschiedlicher Beschriftungen für unterschiedliche Fahrzeugfunktionen und - komponenten sowie die unterschiedlichen Designs der verschiedenen Fahrzeughersteller und -modelle resultiert hierbei, selbst bei gleichem mechanischen Design und Abmessungen, einerseits zu einer großen Anzahl von Varianten dieser mechanischen Bedienelemente, was u.a. zusätzlichen Aufwand bei der Produktion und Lagerhaltung und damit Zusatzkosten verursacht. Andererseits sind die Beschriftungen bzw. Logos und auch das haptische Gefühl mechanischer Tasten vom Fahrzeughersteller oder auch Standardorganisationen wie ISO vordefiniert, so dass eine Personalisierung und Anpassung von mechanischen Tasten nicht möglich ist.

Weiterhin nimmt, zumindest bei einer Bedienung der Vielzahl an Fahrzeugfunktionen und - komponenten ausschließlich oder überwiegend durch mechanische Bedienelemente, deren Anzahl weiterhin zu. Dieses ist neben der Funktionsvielfalt insbesondere auch der Fall, weil zur Sicherstellung von Bedienkomfort und Bediensicherheit eine Taste typischerweise nur eine, nämlich die auf ihr wiedergegebene, Funktion hat und ein Teil der Tasten nur unter bestimmten Bedingungen anwendbar ist, wie beispielsweise das Ein-/Ausschalten eines Tempomaten nur während der Fahrt oder das Ein-/Ausschalten der Handbremse nur bei Stillstand des Fahrzeugs. Ebenso kann eine Verwendung einer Vielzahl mechanischer Bedienelemente störend beim Design des Fahrzeuginteriors sein bzw. dieses verkomplizieren.

Um die Anzahl mechanischer Bedienelemente zu reduzieren, können diese so ausgestaltet sein, dass ihnen durch eine Umprogrammierung mehrere unterschiedliche Funktionen zugewiesen werden können.

Aber selbst wenn die Funktionen, Logos und/oder haptischen Rückmeldungen der Tasten per Software geändert werden können, kann dieses derzeit im Fahrzeug nur über den zentralen Computer bzw. das zentrale Steuergerät und dessen Betriebssystem erfolgen. Daraus resultieren aber neue Probleme:
Zunächst einmal ist es bei gegenwärtigen Betriebssystemen nicht vorgesehen,
Bedienelemente und insbesondere Bedienmodule mit Displaytasten zu programmieren bzw. zu konfigurieren. Ein bestehendes Betriebssystem eines Fahrzeugs zu modifizieren, ist sehr kompliziert und kann daher nur von Fachpersonal mit spezifischem Kenntnisstand erfolgen, wobei weiterhin ein aufwendiges Testen und Debuggen des modifizierten Betriebssystems erforderlich wäre, um eine Gefährdung der Passagiere durch fehlerhafte Programmierungen zu vermeiden.

Aber auch wenn die Betriebssystemsoftware modifiziert werden könnte, so müsste hierfür eine Verbindung mit dem zentralen Computer bzw. dem zentralen Steuergerät hergestellt werden.

Eine physische Verbindung mit einem Computer oder eine für diesen Zweck geeignete spezielle Programmiereinrichtung erfordert hierbei Kabel, spezielle Steckverbinder usw., die zusätzliche Kosten verursachen. Weiterhin kann das Anschließen eines Kabels, je nach Verbauort im Fahrzeug, nach der Montage des Fahrzeugs schwierig bzw. aufwendig sein. Schließlich wäre eine Programmierung über eine physische Verbindung auch ineffizient, da der gleiche Vorgang für jedes einzelne Fahrzeug separat erfolgen müsste.

Aber auch eine kabellose Übertragung der modifizierten Betriebssystemsoftware über eine Zugangseinheit zum Internet für fahrzeugspezifische Dienste, wie eine sogenannte Online-Connectivity Unit (OCU), ist problematisch, da der zentrale Computer während des Herunterladens der modifizierten Software auch die Möglichkeit für ein illegales Eindringen in das Betriebssystem des Fahrzeugs eröffnet und damit ein erhebliches Sicherheitsrisiko darstellt.

Die DE 10 2006 046 496 A1 offenbart, zur Vereinfachung der Bedienbarkeit von internetgestützten Diensten in einem Kraftfahrzeug von einer externen Datenquelle Konfigurationsdaten für Bedienelemente des Kraftfahrzeugs zu empfangen. Die Konfigurationsdaten können hierbei eine Belegung der Bedienelemente mit bestimmten Steuerkommandos oder eine optische Kennzeichnung der aktuellen Funktion eines Bedienelements durch eine dem Bedienelement zugeordnete Anzeigeeinheit betreffen. Die Bedienelemente können gemäß einem Ausführungsbeispiel am Lenkrad des Kraftfahrzeugs angeordnet sein und Displays aufweisen, deren Erscheinungsbild dynamisch verändert werden kann, wobei auch die durch Betätigung dieser Lenkradtasten hervorgerufenen Steuerkommandos je nach Kontext variierbar sind.

Die DE 10 2008 061 574 A1 beschreibt ein Infotainmentsystem, bei dem die grafische Darstellung einer grafischen Bedienoberfläche und/oder die Handhabung der Benutzerschnittstelle auch nach der Herstellung des Infotainmentsystems mittels vom Benutzer erzeugter Benutzer-Konfigurationsdaten verändert werden können. Dafür weist das Infotainmentsystem eine für den Benutzer frei zugängliche Datenübertragungsschnittstelle auf, die beispielsweise als USB-Schnittstelle ausgebildet ist.

Weiterhin offenbart die DE 10 2009 055 221 A1 ein Fahrzeugunterhaltungssystem mit einem Display und einem Steuergerät, das Benutzereingaben über eine Internetverbindung empfangen kann. Mittels der Benutzereingaben, die auf einem Computer oder einem Mobilfunkgerät erfolgen, kann eine auf dem Display dargestellte grafische Benutzerschnittstelle, beispielsweise die Darstellung von Voreinstellungstasten, fernangepasst werden.

Weiterhin offenbart das Dokument US2011082615 ein Bediensystem für ein Fahrzeug mit einer durch einen Benutzer konfigurierbaren Benutzerschnittstelle. Die Konfiguration der Benutzerschnittstelle kann dabei optional mithilfe eines drahtlos angebundenen externen Gerätes erfolgen.

Es ist eine Aufgabe der Erfindung, ein verbessertes Verfahren zur Programmierung eines Bedienmoduls sowie ein verbessertes Verfahren zur Programmierung eines solchen Bedienmoduls zur Verfügung zu stellen.

Diese Aufgabe wird durch ein Verfahren mit den Merkmalen des Anspruchs 1, ein Verfahren mit den Merkmalen des Anspruchs 7, ein Bedienmodul gemäß Anspruch 10 sowie durch ein Computerprogramm mit den Merkmalen des Anspruchs 15 gelöst. Bevorzugte Ausgestaltungen der Erfindung sind Gegenstand der abhängigen Ansprüche.

Das erfindungsgemäße Verfahren zur Programmierung eines Bedienmoduls für ein Fahrzeug, wobei das Bedienmodul mehrere Bedienelemente aufweist und den Bedienelementen unterschiedliche Funktionen des Fahrzeugs zugeordnet werden können, umfasst die folgenden in dem Bedienmodul ausgeführten Schritte:
- Empfangen einer Information über die im Fahrzeug verfügbaren Funktionen und/oder den aktuellen Status des Fahrzeugs von einem zentralen Steuergerät des Fahrzeugs;
- Übermitteln der empfangenen Information an ein externes Gerät über eine drahtlose Verbindung;
- Empfangen von Konfigurationsdaten zur Programmierung des Bedienmoduls von dem externen Gerät über die drahtlose Verbindung; und
- Konfigurieren des Bedienmoduls basierend auf den empfangenen Konfigurationsdaten.

Dieses ermöglicht es Nutzern des Fahrzeugs, den Bedienelementen des Bedienmoduls entsprechend den individuellen Vorlieben und Bedürfnissen Funktionen zuzuweisen, ihre Beschriftungen bzw. Logos und auch das haptische Feedback zu ändern. Die Programmierung kann hierfür komfortabel mittels eines Software-Konfigurators auf einem externen Gerät erfolgen, wobei die erforderlichen Daten ohne Involvierung des zentralen Computers und Betriebssystems des Fahrzeugs drahtlos, beispielsweise über Bluetooth oder WLAN, an das Bedienmodul übertragen werden. Weiterhin ist durch die drahtlose Übertragung keine Kabelverbindung zwischen dem Bedienmodul und dem externen Gerät erforderlich, die andernfalls nach der Montage des Bedienmoduls in dem Fahrzeug schwierig ist, wenn auf entsprechende elektrische Anschlüsse auf der Vorderseite des Bedienmoduls beispielsweise aus Kosten- oder Designgründen verzichtet werden soll.

Vorzugsweise werden hierbei die Konfigurationsdaten von einem mobilen Endgerät eines Fahrzeugnutzers empfangen. Dieses ist für den Fahrzeugnutzer besonders komfortabel, da er so beispielsweise sein persönliches Smartphone nutzen kann, mit dessen Benutzung er besonders vertraut ist.

Insbesondere kann entsprechend der empfangenen Konfigurationsdaten einem Bedienelement eine von mehreren unterschiedlichen Funktionen und/oder Anzeigen und/oder haptischen Rückmeldungen zugeordnet werden.

Gemäß einer Ausführungsform der Erfindung erfolgt eine Anzeige von Bedienelementen auf einem Display des Bedienmoduls entsprechend der empfangenen Konfigurationsdaten, wobei die Bedienelemente als Bildsymbole dargestellt werden, die eine dem jeweiligen Bedienelement zugeordnete Funktion wiedergeben.

Vorteilhafterweise können die Konfigurationsdaten ein von dem Fahrzeugnutzer erstelltes Bildsymbol für ein Bedienelement enthalten, welches für das Bedienelement auf dem Display dargestellt wird.

Ebenso enthalten die Konfigurationsdaten vorteilhafterweise eine von dem Fahrzeugnutzer festgelegte Position auf dem Display für ein Bildsymbol, wobei das Bildsymbol an dieser Position auf dem Display dargestellt wird.

Das erfindungsgemäße Verfahren zur Programmierung eines Bedienmoduls für ein Fahrzeug, wobei das Bedienmodul mehrere Bedienelemente aufweist und den Bedienelementen unterschiedliche Funktionen des Fahrzeugs zugeordnet werden können, umfasst die folgenden in einem externen Gerät ausgeführten Schritte:
- Empfangen einer Information über die im Fahrzeug verfügbaren Funktionen und/oder den aktuellen Status des Fahrzeugs von dem Bedienmodul über eine drahtlose Verbindung;
- Erfassen von Nutzereingaben eines Fahrzeugnutzers zur Programmierung des Bedienmoduls;
- Erzeugen von Konfigurationsdaten zur Programmierung des Bedienmoduls basierend auf den erfassten Nutzereingaben;
- Übermitteln der Konfigurationsdaten an das Bedienmodul über die drahtlose Verbindung.

Vorzugsweise umfassen hierbei die Nutzereingaben für ein Bedienelement eine Zuordnung von einer von mehreren unterschiedlichen Funktionen und/oder Anzeigen und/oder haptischen Rückmeldungen.

Gemäß einer Ausführungsform der Erfindung enthalten hierbei die Nutzereingaben für eine Anzeige von Bedienelementen auf einem Display des Bedienmoduls ein von dem Fahrzeugnutzer erstelltes Bildsymbol für ein Bedienelement und/oder eine von dem Fahrzeugnutzer festgelegte Position auf dem Display für ein Bildsymbol.

Vorzugsweise kann hierbei auf einem Display des externen Geräts für ein Bedienelement eine Funktionszuordnung, ein Logo, Parameter für ein haptisches Feedback und/oder eine Vorschau für die Darstellung der Bildsymbole auf dem Display des Bedienmoduls angezeigt werden.

Das erfindungsgemäße Bedienmodul für ein Fahrzeug weist mehrere Bedienelemente auf, wobei den Bedienelementen unterschiedliche Funktionen des Fahrzeugs zugeordnet werden können. Das Bedienmodul umfasst
- eine Betätigungseinheit zur Betätigung von einem der mehreren Bedienelemente;
- eine elektronische Anzeigeeinheit zum Darstellen einer den Bedienelementen zugeordneten Anzeige;
- ein Stellglied zur Erzeugung einer haptischen Rückmeldung in Reaktion auf eine Betätigung der Betätigungseinheit;
- eine Kommunikationseinheit mit einer drahtlosen Schnittstelle, mittels der eine Konfiguration zur Programmierung des Bedienmoduls empfangen werden kann; und
- eine Steuereinheit, mittels der eine Programmierung des Bedienmoduls basierend auf einer empfangenen Konfiguration erfolgt und mittels der nach der Programmierung bei einer Betätigung der Betätigungseinheit je nach betätigtem Bedienelement ein elektrisches Steuersignal für eine gemäß der Programmierung zugeordnete Funktion erzeugt wird.

Gemäß einer Ausführungsform der Erfindung ist die Betätigungseinheit und die elektronische Anzeigeeinheit integriert als berührungsempfindlicher Bildschirm ausgestaltet, wobei die Betätigung der Bedienelemente durch einen Fahrzeugnutzer mittels einer Berührung des berührungsempfindlichen Bildschirms erfolgt

Gemäß einer Ausführungsform der Erfindung ist die elektronische Anzeigeeinheit als OLED-, MicroLED oder LCD-Display ausgestaltet und/oder das Stellglied zur Erzeugung einer haptischen Rückmeldung als Piezoaktuator, Vibrationsmotor oder ein anderes mechanisch verformbares Element ausgestaltet.

Vorzugsweise umfasst die Kommunikationseinheit des Bedienmoduls eine WiFi-Kommunikationseinheit und/oder eine Bluetooth-Kommunikationseinheit und/oder eine andere kabellose Kommunikationseinheit.

Weiterhin betrifft die Erfindung auch ein Computerprogramm zum Durchführen eines erfindungsgemäßen Verfahrens.

Weitere Merkmale der vorliegenden Erfindung werden aus der nachfolgenden Beschreibung und den Ansprüchen in Verbindung mit den Figuren ersichtlich.
- Fig. 1: zeigt schematisch ein Ablaufdiagramm eines erfindungsgemäßen Verfahrens;
- Fig. 2: zeigt das erfindungsgemäße Zusammenwirken von einem drahtlos konfigurierbaren Bedienmodul, einem mobilen Endgerät eines Fahrzeugnutzers sowie des zentralen Steuergeräts eines Fahrzeugs;
- Fig. 3: zeigt ein Bedienmodul am Beispiel von sechs Bedienelementen in einer 2 x 3 Anordnung mit zugehörigem Modulgehäuse;
- Fig. 4: zeigt schematisch das im Innenraum eines Fahrzeugs verbaute Bedienmodul aus Figur 3;
- Fig. 5: zeigt schematisch eine Explosionsdarstellung für das im Innenraum eines Fahrzeugs verbaute Bedienmodul aus Figur 4; und
- Fig. 6: zeigt schematisch für ein Anwendungsbeispiel ein Bedienmodul mit sechs dargestellten Bedienelementen und ein mobiles Endgerät zur Konfiguration des Bedienmoduls mit einer Visualisierung der Parameter für ein haptisches Feedback bei Bedienung von einem der Bedienelemente.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung, wie er in den Ansprüchen definiert ist, zu verlassen.

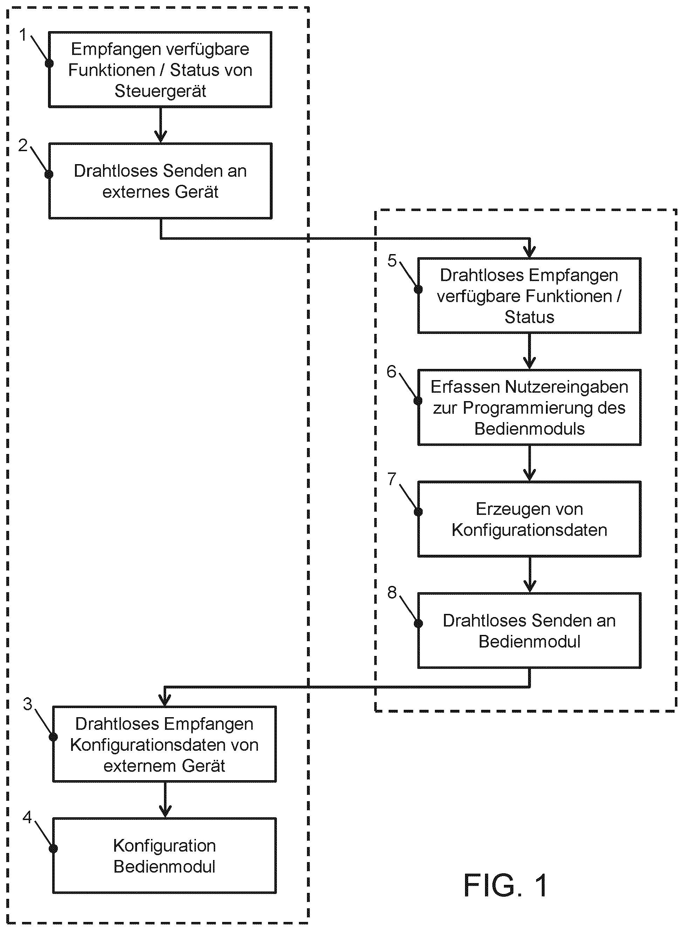

Figur 1 zeigt schematisch ein Ablaufdiagramm zur Programmierung eines Bedienmoduls für ein Fahrzeug, wobei Verfahrensschritte eines erfindungsgemäßen Verfahrens in dem Bedienmodul mit Verfahrensschritten eines erfindungsgemäßen Verfahrens in einem mobilen Endgerät eines Fahrzeugnutzers zusammenwirken. Das Bedienmodul weist hierbei ein oder mehrere Bedienelemente auf, wobei den Bedienelementen durch die Programmierung unterschiedliche Funktionen des Fahrzeugs zugeordnet werden können.

Gemäß Verfahrensschritt 1 wird zunächst von dem Bedienmodul eine Information darüber empfangen, welche Bedienfunktionen im Fahrzeug verfügbar sind und dem Bedienmodul zugewiesen werden können. Ebenso wird der aktuelle Status des Fahrzeugs ermittelt und an das Bedienmodul übertragen. Beides kann dem Bedienmodul insbesondere von einem zentralen Steuergerät des Fahrzeugs zur Verfügung gestellt werden.

Solche Bedienfunktionen können beispielsweise die Ein-/Ausschaltung des Innenlichts, Ent- und Verriegelungen von Türen oder Sitzen, Sitzverstellungen, die Aktivierung bzw. Deaktivierung von Zentralverriegelungs- oder Kindersicherungsfunktionen, des Scheibenwischers oder einer beheizbaren Heckscheibe, die Einstellung und Dosierung einer Sitzheizung oder Klimaanlage, das Öffnen bzw. Schließen eines Schiebedachs und viele weitere Fahrzeugfunktionen umfassen.

Manche dieser Bedienfunktionen sind hierbei unabhängig vom Fahrzeugtyp immer präsent, wie beispielsweise die Bedienung des Scheibenwischers, das Vorhandensein anderer Bedienfunktionen hängt dagegen vom Fahrzeugmodell bzw. der Ausstattungsvariante des Fahrzeugs ab. Ist beispielsweise eine Sitzheizung oder ein Schiebedach in dem Fahrzeug, welches mit dem Bedienmodul versehen ist, nicht vorhanden, so können Bedienfunktionen hierfür dem Bedienmodul nicht zugewiesen werden.

Weiterhin können gewisse der Bedienfunktionen unabhängig vom aktuellen Status des Fahrzeugs ausgeführt werden, andere der Bedienfunktionen dagegen nur für einen bestimmten Fahrzeugstatus. So kann der Status eines Fahrzeugs insbesondere wiedergeben, ob der Motor gegenwärtig läuft oder nicht läuft oder ob das Fahrzeug gegenwärtig in Bewegung ist oder steht. Beispielsweise kann das Öffnen bzw. Schließen eines Schiebedachs unabhängig vom Fahrzeugstatus jederzeit möglich sein, während das Öffnen bzw. Schließen der Kofferraumklappe nur in stehendem Zustand zulässig sein kann. Hierbei kann es auch vorgesehen sein, dass dem selben Bedienelement unterschiedliche Bedienfunktionen zugewiesen werden, die dann je nach gegenwärtigem Fahrzeugstatus aktiviert bzw. ausgetauscht werden.

Schließlich kann auch vorgesehen werden, Funktionen nur bei bestimmten geografischen Positionen des Fahrzeugs verfügbar zu machen, beispielsweise um das Öffnen des Kofferraums des Fahrzeugs nur zu Hause zu ermöglichen.

In dem darauf folgenden Verfahrensschritt 2 werden die Informationen über die verfügbaren Funktionen und den aktuellen Fahrzeugstatus an ein externes Gerät eines Fahrzeugnutzers übertragen. Soweit den Bedienelementen des Bedienmoduls bereits Funktionen zugeordnet sind, können die Informationen zusätzlich auch Angaben über die aktuelle Konfiguration der Bedienelemente enthalten. Für die Übertragung wird ein Verfahren zur drahtlosen Datenübertragung, beispielsweise gemäß dem Bluetooth- oder WLAN-Standard, eingesetzt.

Nach einer Erzeugung von Konfigurationsdaten zur Programmierung des Bedienmoduls, die auf dem externen Gerät des Fahrzeugnutzers erfolgt, werden diese Konfigurationsdaten in dem darauffolgenden Verfahrensschritt 3 wiederum drahtlos empfangen und dienen dann in Verfahrensschritt 4 zur Konfiguration des Bedienmoduls.

Für die Ausführung des erfindungsgemäßen Verfahrens in dem externen Gerät eines Fahrzeugnutzers, insbesondere einem mobilen Endgerät des Fahrzeugnutzers wie einem Smartphone, einer Smartwatch, einem Tablet- oder Laptopcomputer, muss dieses zunächst mit dem Bedienmodul gekoppelt werden. Diese Kopplung kann manuell aktiviert werden oder auch beim Einsteigen in das Fahrzeug automatisch erfolgen. Weiterhin ist es erforderlich, dass auf dem mobilen Endgerät eine geeignete Softwareanwendung (App) zur Konfiguration des Bedienmoduls installiert ist, die beispielsweise von dem Fahrzeughersteller in einer digitalen Vertriebsplattform für Anwendungssoftware bereitgestellt wird. Hierbei kann die Softwareanwendung über eine Standard- und eine professionelle Version verfügen, um je nach Kenntnisstand des Nutzers unterschiedliche Konfigurationen zu ermöglichen. Ebenso kann vorgesehen werden, dass ein Teil der Konfiguration, der beispielsweise sicherheitsrelevante Einstellungen betrifft, nur von autorisierten Personen vorgenommen werden kann.

Nachdem die Softwareanwendung zur Konfiguration des Bedienmoduls von dem Fahrzeugnutzer gestartet worden ist, können in Verfahrensschritt 5 die von dem Bedienmodul gesendeten Informationen über die verfügbaren Funktionen des Fahrzeugs und den aktuellen Fahrzeugstatus durch das externe Gerät empfangen und weiterverarbeitet werden. Hierbei kann es auch vorgesehen sein, dass das externe Gerät nach dem Start der Softwareanwendung die Ermittlung und Übertragung der Informationen durch einen früheren, nicht dargestellten Verfahrensschritt imitiert.

In Verfahrensschritt 6 werden dann Nutzereingaben des Fahrzeugnutzers zur Programmierung des Bedienmoduls erfasst. Hierfür kann der Fahrzeugnutzer insbesondere mittels einer grafischen Benutzeroberfläche des externen Gerätes Eingaben für eines oder mehrere Bedienelemente des Bedienmoduls vornehmen. So kann der Fahrzeugnutzer für ein Bedienelement eine Funktion auswählen, wobei die Zuordnung der Funktion insbesondere in Abhängigkeit von dem aktuellen Fahrzeugstatus erfolgt. Weiterhin kann der Fahrzeugnutzer der Funktion eine grafische Darstellung, insbesondere in Form eines Logos, zuweisen. Ebenso können Parameter für ein haptisches Feedback mittels eines Piezoaktuators definiert werden. Durch die haptische Rückmeldung wird die Interaktion zwischen Fahrzeugnutzer und Fahrzeug verbessert. So kann eine Rückmeldung an den Fahrzeugnutzer selbst dann gegeben werden, wenn die grafische Darstellung nicht einsehbar ist, beispielsweise, weil sie durch einen Finger des Fahrzeugnutzers verdeckt wird.

Dieses kann entsprechend den persönlichen Vorzügen des Fahrzeugnutzers oder auch in Abhängigkeit der Betriebsumgebungen erfolgen. So kann beispielsweise bei einem Baustellenfahrzeug ein starkes haptisches Feedback und eine Darstellung sehr heller Bildsymbole gewählt werden.

Dabei kann auf eine Bibliothek von verschiedenen Funktionen, grafischen Darstellungen, insbesondere in Form eines Logos, und Parametersätzen für ein haptisches Feedback mittels eines Piezoaktors zugegriffen werden, die in einem Speicher des externen Gerätes abgelegt sind. Ebenso kann der Fahrzeugnutzer mittels der Softwareanwendung externe Bilder für neue Logos und/oder Parametereinstellungen für den Piezoaktor über eine mobile Datenverbindung in das externe Gerät herunterladen oder mittels der Softwareanwendung neu erstellen. Hierbei kann auch eine Vorschau auf der grafischen Benutzeroberfläche des externen Gerätes wiedergegeben werden.

Während der Eingaben des Fahrzeugnutzers oder auch wenn diese abgeschlossen sind, werden in Verfahrensschritt 7 basierend auf den erfassten Nutzereingaben Konfigurationsdaten zur Programmierung des Bedienmoduls erzeugt. Diese werden dann in Verfahrensschritt 8 drahtlos an das Bedienmodul übertragen, um dann, wie oben beschrieben, für die Konfiguration des Bedienmoduls verwendet zu werden.

Neben einer Konfiguration eines einzelnen Bedienmoduls für ein einzelnes Fahrzeug kann so auch eine erstmalige Konfiguration oder Aktualisierung der Konfiguration von Bedienmodulen mehrerer Fahrzeuge oder sogar der gesamten Fahrzeugflotte eines Unternehmens schnell und einfach erfolgen.

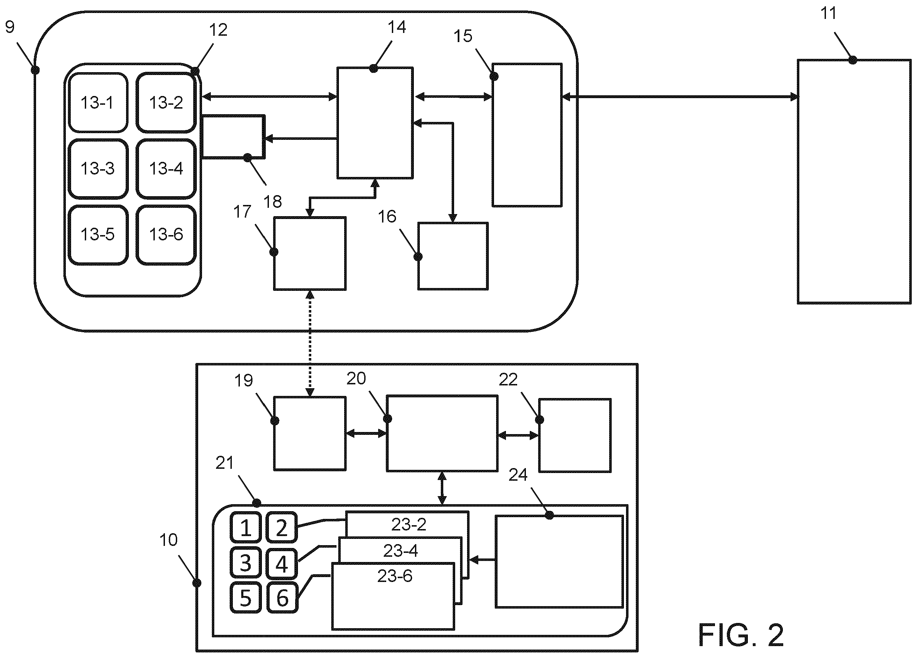

Figur 2 zeigt schematisch, wie ein erfindungsgemäßes drahtlos konfigurierbares Bedienmodul 9, ein mobiles Endgerät 10 des Fahrzeugnutzers sowie ein zentrales Steuergerät 11 eines Fahrzeugs, in dem das Bedienmodul verbaut ist, zusammenwirken. Der Datenaustausch zwischen dem Bedienmodul und dem zentralen Steuergerät erfolgt hierbei über Kabelverbindungen, insbesondere über ein Bussystem wie den CAN-Bus, zwischen dem Bedienmodul und dem mobilen Endgerät dagegen drahtlos.

Das Bedienmodul 9 weist ein Display 12 auf, das insbesondere als Touchscreen ausgestaltet sein kann. Die Verwendung von Touchscreens hat hierbei den Vorteil, dass für diese einerseits eine hohe Zuverlässigkeit und Akzeptanz der Nutzer vorliegt und andererseits je nach Bedarf beliebige Bildsymbole dargestellt werden können. Hierbei ist beispielsweise ein LCD- oder OLED-Display mit einer berührungsempfindlichen Oberfläche versehen, die mit resistiven oder kapazitiven Techniken ermittelt, an welcher Position des Displays dieses von einem Fahrzeugnutzer berührt wird. Im dargestellten Beispiel sind auf dem Display sechs Bedienelemente 13-1 bis 13-6 dargestellt.

Wird der Touchscreen von dem Fahrzeugnutzer berührt, beispielsweise im Bereich des Bedienelements 13-1, so wird der Berührungspunkt ermittelt und eine Information hierüber an einen Mikrokontroller 14 des Bedienmoduls 9 weitergeleitet. Der Mikrokontroller 14 ermittelt, welches Bedienelement von dem Fahrzeugnutzer angewählt wurde und welche Funktion dem angewählten Bedienelement bei dem aktuellen Fahrzeugstatus zugeordnet ist. Für die auswählte Funktion wird dann über eine CAN-Schnittstelle 15 eine entsprechende CAN-Nachricht an das zentrale Steuergerät 11 gesendet und von diesem ausgeführt bzw. zur weiteren Verarbeitung zunächst an eine nicht dargestellte Steuereinheit für die bediente Fahrzeugkomponente weitergeleitet, sofern diese ebenfalls an dem CAN-Bus angeschlossen ist. Weiterhin kann über einen Piezoaktuator 18 ein der bedienten Funktion zugeordnetes haptisches Feedback ausgegeben werden. Um Kosten zu sparen, ist hierbei auch eine Ausführungsform möglich, bei welcher der Piezoaktor durch einen mechanischen Schalter ersetzt werden kann. In diesem Fall ist es jedoch nicht möglich, unterschiedliche haptische Rückmeldungen an den Fahrzeugnutzer auszugeben.

Von dem zentralen Steuergerät 11 werden Informationen über den aktuellen Fahrzeugstatus und die verfügbaren Funktionen des Fahrzeugs ebenfalls als CAN-Nachrichten an das Bedienmodul 9 gesendet. Dieses kann beispielsweise bei einer Änderung des Fahrzeugstatus oder aber auch in regelmäßigen Abständen erfolgen. Die Informationen über den aktuellen Fahrzeugstatus und die verfügbaren Funktionen des Fahrzeugs werden dem Mikrokontroller 14 zugeführt und von diesem in einem internen Speicher 16 abgelegt. In dem internen Speicher 16 werden ebenso verschiedene Parameter und Einstellungen für die Bedienelemente abgelegt, wie die für den jeweiligen Fahrzeugstatus zugeordnete Funktion, ggfs. auch in Abhängigkeit von dem aktuellen Standort des Fahrzeugs, das zugeordnete Bildsymbol oder das der jeweiligen Funktion zugeordnete haptische Feedback. Hierbei können die verschiedenen Funktionalitäten, Darstellungen und Formen der haptischen Rückkopplung der Bedienelemente werkseitig bereits vor Auslieferung des Fahrzeugs in diesem hinterlegt werden und dann von dem jeweiligen Fahrzeugnutzer individuell entsprechend seinen Bedürfnissen programmiert werden.

Für die Konfiguration des Bedienmoduls werden Informationen über die verfügbaren Funktionen des Fahrzeugs, den aktuellen Fahrzeugstatus und die vorhandenen Bedienelementeinstellungen mittels einer Kommunikationseinheit 17 drahtlos an das externe Gerät 10 gesendet. Dieses weist ebenfalls eine Kommunikationseinheit 19 zur drahtlosen Kommunikation auf. Ein Mikrokontroller 20 leitet die empfangenen Informationen an einen internen Speicher 21 des mobiles Endgeräts 10 und wertet Eingaben des Nutzers für die Programmierung des Bedienmoduls, die dieser über eine grafische Benutzerschnittstelle 22 vornimmt, aus.

Für jedes der sechs Bedienelemente können Einstellungen, wie die beispielhaft angegebenen Einstellungen 23-2, 23-4 und 23-6 für die Bedienelemente 24 und 6, in Abhängigkeit vom jeweiligen Fahrzeugstatus aus einer lokalen Bibliothek bzw. Datenbank 24, die in dem internen Speicher 21 vorliegt, gewählt und zunächst ebenfalls lokal abgespeichert werden. Diese Datenbank 24 kann beispielsweise eine Vielzahl möglicher Fahrzeugfunktionen enthalten, von denen in dem jeweils betrachteten Fahrzeug nur ein Teil implementiert ist. Ebenso können eine Vielzahl von Bildsymbolen bzw. Logos für die verschiedenen Funktionen vorliegen. Hierbei können für eine Funktion auch unterschiedliche Logos zur Auswahl bereitstehen und auch weitere bildliche Darstellungen aus einer externen Datenbank geladen werden, beispielsweise über eine Mobilfunk-Datenverbindung. Weiterhin ist es auch möglich, dass bildliche Darstellungen von dem Nutzer selbst entsprechend seinen Wünschen kreiert werden können. Schließlich enthält die Datenbank 24 auch Voreinstellungen für die Ansteuerung des Piezoaktuators.

Die vom Fahrzeugnutzer mittels des mobilen Endgeräts 10 generierten Einstellungen können dann über die Kommunikationseinheit 19 des mobilen Endgeräts an die Kommunikationseinheit 17 des Bedienmoduls übertragen werden und dann im internen Speicher 16 des Bedienmoduls 9 zunächst zwischengespeichert werden. Von dem internen Speicher 16 werden die Einstellungen für die Bedienelemente, wie beispielsweise die jeweiligen Bildsymbole oder Ansteuerungen für das haptische Feedback, dann von dem Mikrocontroller 14 je nach aktuellem Fahrzeugstatus abgefragt und dem Touchscreen 12 bzw. Piezoaktuator 18 zur Ausgabe zugeführt.

Ein Zugriff des mobilen Geräts bzw. der auf diesem Gerät laufenden Softwareanwendung zur Konfiguration des Bedienmoduls auf das zentrale Steuergerät des Fahrzeugs ist hierbei nicht möglich, vielmehr ist die einzige Möglichkeit, eine Funktion auszuführen, das physische Drücken des festgelegten Bereichs auf dem Display des Bedienmoduls.

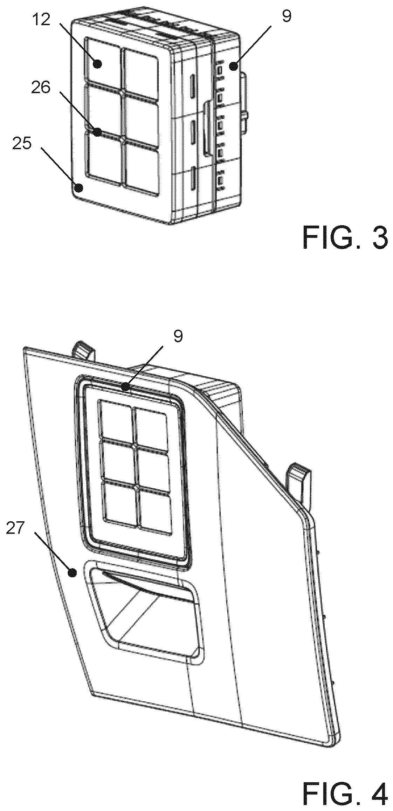

Ein erfindungsgemäßes Bedienmodul 9 mit sechs Bedienelementen in einer 2 x 3 Anordnung ist in Figur 3 gezeigt. Dieses weist ein einzelnes Display 12 auf, bei dem durch eine Frontabdeckung 25 mit mehreren Stegen 26 trotz der durchgehenden Displayfläche die dargestellten Bildsymbole physisch voneinander abgegrenzt werden. Dieses vereinfacht dem Fahrzeugnutzer eine Bedienung, ohne das Bedienmodul betrachten zu müssen, da die Unterteilung dann auch haptisch wahrgenommen werden kann. Insbesondere für den Fahrer eines Fahrzeugs kann dieses hilfreich sein, da dann für die Bedienung während des Fahrbetriebes der Blick nicht von der Straße abgewandt werden muss. Ebenso kann die Frontabdeckung aber auch eine große Öffnung ohne Unterbrechungen aufweisen, um so eine zusammengehörende Benutzeroberfläche darzustellen und den verfügbaren Anzeigebereich zu maximieren. Anstatt eines einzelnen Displays, auf dem mehrere Bedienelemente dargestellt werden, kann das Bedienmodul aber auch aus mehreren mechanisch separaten Bedienelementen bestehen, die zu einer Komponente zusammengefasst werden, wobei auch in diesem Fall jedes der Bedienelemente separat programmiert und angesteuert werden kann. Die einzelnen Bedienelemente des Moduls werden in diesem Fall in einem Modulgehäuse angeordnet, das Schienen aufweist, die so auf die an der Außenseite der Bedienelementgehäuse befindlichen Führungen zusammenwirken, dass eine spielfreie Befestigung erfolgt. Ein solches Bedienmodul kann dann, obwohl es aus mehreren mechanisch separaten Bedienelementen besteht, in einem Arbeitsschritt eingebaut werden, was die Montage vereinfacht und die Montagezeit verringert.

Grundsätzlich kann sowohl bei einem einzelnen Display mit einer Darstellung mehrerer Bedienelemente als auch bei mehreren mechanisch separaten Bedienelementen eine beliebige Anordnung und Anzahl der Bedienelemente vorgesehen werden. Häufig ist jedoch eine matrixförmige Anordnung mit einem oder mehreren Bedienelementen nebeneinander und einem oder mehreren Bedienelementen übereinander zweckmäßig. Wenn das Bedienmodul beispielsweise auf einer B-, C- oder D-Säule verbaut ist, kann es aus Platzgründen eine lange, aber schmale rechteckige Form aufweisen. Ebenso kann statt einer solchen rechteckigen Anordnung aber je nach Verbauort im Fahrzeug auch eine andersförmige Anordnung sinnvoll sein.

Figur 4 zeigt schematisch, wie ein solches Bedienmodul im Innenraum eines Fahrzeugs verbaut werden kann. Das Bedienmodul ist hierbei in einer Aussparung einer Frontblende 27, die Teil der Innenraumverkleidung des Fahrzeugs ist, angeordnet. Vorzugsweise wird das Bedienmodul in einem Bereich angeordnet, der von dem Fahrzeugnutzer, insbesondere dem Fahrer des Fahrzeugs, gut erreichbar ist, wie beispielsweise im Bereich der Mittelkonsole. Ebenso kann ein solches Bedienmodul aber auch beispielsweise an einer Armlehne oder in einer Seitentür vorgesehen sein.

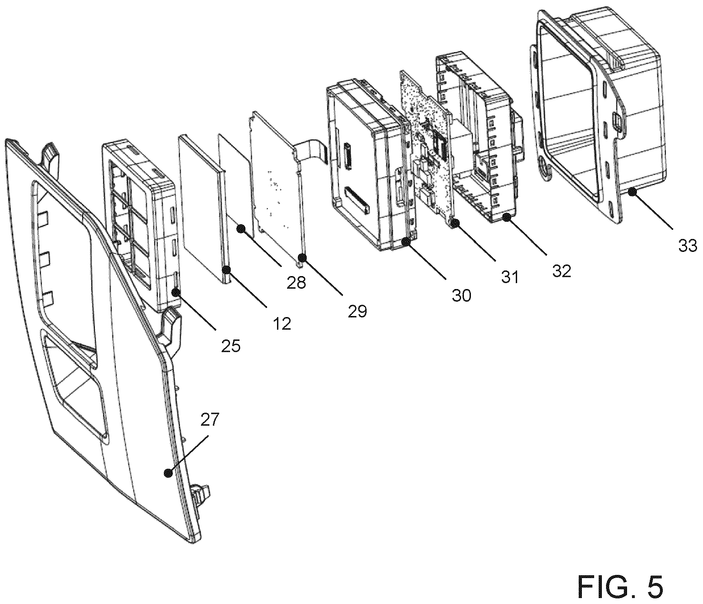

Figur 5 zeigt schematisch eine Explosionsdarstellung für das Bedienmodul aus Figur 4. Das Bedienmodul ist hierbei hinter der Frontblende 27 angeordnet. Eine Frontabdeckung 25 des Bedienmoduls unterteilt den Anzeigebereich in sechs getrennte Bereiche, um so den Eindruck separater "Tasten" zu vermitteln. Hinter der Frontabdeckung 25 ist ein berührungsempfindliches Display 12 angeordnet, dass insbesondere als LCD- oder OLED-Display ausgestaltet sein. Ebenso sind aber auch andere Displaytypen geeignet, die eine geringe Einbautiefe haben. Vorzugsweise ermöglicht das Display hierbei eine RGB-Farbanzeige, eine monochrome Anzeige ist aber ebenso denkbar. Weiterhin hat die Anzeige eine ausreichende Anzahl an Bildpunkten, um unterschiedliche Symbole gut erkennbar darstellen zu können.

Eine Klebstoffschicht 28 verbindet das LCD-Display mit einer ersten Leiterplatte 29, welche die erforderlichen elektronischen Bauteile zum Betrieb des Touchscreens aufweist und flexibel mit einer Hauptplatine 31 verbunden ist. Auf diese Weise ist der Touchscreen beweglich und kann so ein haptisches Feedback an den Fahrzeugnutzer ausgeben. Hierfür ist auf der Hauptplatine 31 ein Piezoaktuator vorgesehen, wobei die Ausgestaltung der haptischen Rückmeldung beispielsweise bzgl. Stärke, Dauer und Frequenz frei programmiert werden kann. Der Piezoaktuator kann hierbei aus mehreren Piezoplatten bestehen um so einerseits mit relativ niedrigen Betriebsspannungen betrieben werden zu können und die Ausdehnung bei Anlegen der Betriebsspannung zu vergrößern. Mit einem zwischen den beiden Leiterplatten angeordneten Hebelmechanismus 30 wird hierbei sichergestellt, dass eine solche haptische Rückmeldung unabhängig davon, wo auf das berührungsempfindliche LCD-Display gedrückt wird, ausgegeben wird.

Auf der Hauptplatine 31 kann zur Aktivierung des Piezoaktuators ein Kraftsensor oder Annäherungssensor vorgesehen sein. Hierbei kann zunächst mit dem Kraftsensor detektiert werden, dass der Fahrzeugnutzer zur Bedienung eines der dargestellten Bedienelemente auf die Displayoberfläche gedrückt hat. Welches der dargestellten Bedienelemente von dem Fahrzeugnutzer angewählt wurde, kann dann durch eine Auswertung der Signale der berührungsempfindlichen Oberfläche des Displays erfolgen. Weiterhin kann mit dem Kraftsensor auch die Stärke und Dauer, mit welcher der Fahrzeugnutzer auf ein dargestelltes Bedienelement drückt, ermittelt werden um basierend darauf unterschiedliche Eingaben zu unterscheiden. Ebenso kann diese Funktion aber auch durch den Berührungssensor des Touchscreens oder den Piezoaktuator als Sensorelement durchgeführt werden.

Weiterhin ist auf der Hauptplatine 31 eine Kommunikationseinheit vorgesehen, die es dem Bedienmodul ermöglicht, über eine CAN-Schnittstelle und geeignete Steckverbindungen einerseits von dem Fahrzeug Informationen über den aktuellen Fahrzeugstatus mittels CAN-Nachrichten zu empfangen und andererseits das Fahrzeug durch CAN-Nachrichten darüber zu informieren, welche Fahrzeugfunktion von dem Fahrzeugnutzer mittels des Bedienmoduls betätigt wird. Ebenso ist eine Schnittstelle zur drahtlosen Kommunikation mit einem externen Gerät und eine hierfür geeignete Antenne vorgesehen, wobei vorzugsweise Bluetooth verwendet wird, da dieses eine einfache Kopplung ermöglicht und die Reichweite auf wenige Meter begrenzt ist.

Eine rückseitige Abdeckung 32 schützt die Elektronik und bildet den rückwärtigen Abschluss des Bedienmoduls. Das komplette Bedienmodul wird dann in einem Gehäuse 33 beherbergt, dass mit dem Fahrzeug fest verbunden wird.

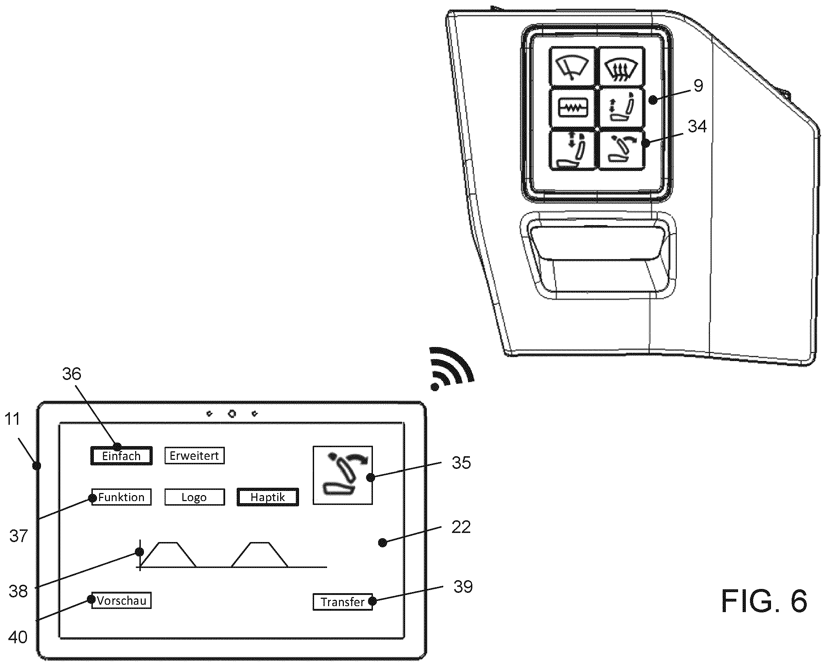

Ein Anwendungsbeispiel für ein Bedienmodul mit sechs Bedienelementen in einer 2 x 3 Anordnung ist in Figur 6 schematisch dargestellt. Hierbei wird in Form eines Menüs auf jedem der Bedienelemente ein anderes Symbol gezeigt, so dass sechs unterschiedliche Funktionen bedient werden können, in diesem Fall bezogen auf Scheibenwischer-, Belüftungs- und Sitzeinstellungen. Hierbei kann sich nach einer Betätigung durch den Fahrzeugnutzer die Darstellung des betätigten Bedienelementes oder auch von mehreren der dargestellten Bedienelemente ändern um beispielsweise weitere Symbole für die Einstellung der ausgewählten Funktion anzuzeigen.

Wie bereits beschrieben, kann das Bedienmodul erfindungsgemäß mit einem mobilen Endgerät, in dem dargestellten Fall einem Tablett-Computer, konfiguriert werden. Ebenso kann aber beispielsweise auch ein Smartphone hierfür verwendet werden.

In dem dargestellten Beispiel folgt mittels des mobilen Geräts 11 eine Konfiguration des Bedienelement 34, mit dem die Rückenlehne eines Sitzes elektronisch verstellt werden kann, beispielsweise um die Sitze für eine Laderaumerweiterung automatisch umzuklappen. Das dem Bedienelement zugeordnete Logo 35 wird hierbei auf der grafischen Benutzerschnittstelle 22 des mobilen Geräts 11 dargestellt, um dem Fahrzeugnutzer während der Konfiguration zu verdeutlichen, welches der Bedienelemente gegenwärtig von ihm konfiguriert wird. Weiterhin kann über zwei Icons 36 eine von zwei verschiedenen Bedienmodi gewählt werden, wobei ein Bedienmodus eine einfache Bedienung der Grundeinstellungen ermöglicht, und der zweite Bedienmodus dagegen auch erweiterte Einstellungen ermöglicht. Im dargestellten Fall ist hierbei der erste Bedienmodus ausgewählt, wobei dieses durch eine Hervorhebung des Icons grafisch verdeutlicht wird. In einer weiteren Ebene kann über drei Icons 37 ausgewählt werden, ob der Fahrzeugnutzer einem Bedienelement eine neue Funktion zuordnen, das dargestellte Logo ändern oder das zugeordnete haptische Feedback anpassen will. Im vorliegenden Fall soll das haptische Feedback eingestellt werden, wie durch die Hervorhebung des entsprechenden Icons verdeutlicht. Hierfür können verschiedene Amplituden, Wellenformen und/oder Frequenzen der an den Piezoaktuator angelegten Spannung ausgewählt und gegebenenfalls auch manuell variiert werden. Dabei können auch Schwellenwerte definiert werden, mit denen konfiguriert werden kann, wie stark ein Bedienelement gedrückt werden muss, um eine Funktion zu aktivieren und das haptische Feedback zu erhalten. Die gewählte Wellenform 38 ist exemplarisch auf der grafischen Benutzerschnittstelle wiedergegeben, wobei der Amplitudenverlauf über die Zeit, beispielsweise über einen Bereich von einigen Millisekunden, dargestellt ist. Nachdem die Konfiguration von dem Nutzer vorgenommen worden ist, kann diese mittels eines weiteren Icons 39 an das Bedienmodul übertragen werden. Schließlich ist auch ein Icon 40 vorgesehen mit dem eine Vorschau für die verschiedenen Bedienelemente aufgerufen werden kann.

Die Erfindung kann in verschiedensten Fahrzeugen wie Pkws, Motorrädern, Lkws und Bussen angewendet werden, wobei die Größe und Form des Bedienmoduls je nach Fahrzeugtyp, zur Verfügung stehendem Platz und Design des Interieurs gewählt werden kann. So kann bei einer Verwendung eines erfindungsgemäßen Bedienmoduls in Motorrädern, bei denen bauartbedingt nur begrenzt Platz für Bedienelemente zur Verfügung steht, das Modul durch die individuelle Konfiguration Platz für von dem jeweiligen Nutzer nicht benötigte bzw. verwendete Bedienelemente einsparen.

Das erfindungsgemäße Bedienmodul kann auch erleichtern, Fahrzeuge multifunktional zu machen bzw. zu modularisieren. So können beispielsweise für ein Nutzfahrzeug verschiedene Ausrüstungseinheiten erworben und vorrätig gehalten werden und die jeweils erforderlichen Ausrüstungseinheiten nur dann im Frachtbereich installiert werden, wenn diese benötigt werden. Zur Bedienung der installierten Ausrüstungseinheit kann dann die Benutzeroberfläche des Bedienmoduls so konfiguriert werden, dass die erforderlichen Bedienelemente für die installierte Ausrüstungseinheit dargestellt werden und bedient werden können.

Das erfindungsgemäße Bedienmodul ist aber nicht auf die Verwendung in Fahrzeugen beschränkt, sondern kann auch in anderen Transportgeräten oder Arbeitsmaschinen angewendet werden, die eine flexible und veränderbare Benutzeroberfläche und Personalisierung erfordern, um so die Bedienung zu vereinfachen und damit auch Lernzeiten zu verkürzen und die Arbeitseffizienz zu verbessern.

Hierfür kann es auch vorgesehen werden, statt eines fest verbauten Bedienmoduls einen mobilen Controller mit konfigurierbarer Benutzeroberfläche und haptischem Feedback vorzusehen. Wenn beispielsweise ein Nutzer einen Kran oder ein anderes Arbeitsgerät steuert, kann es erforderlich werden, den Kran bzw. das Arbeitsgerät zu verlassen, um eine bessere Sicht auf die Arbeitsumgebung zu haben. Hierfür kann es vorgesehen werden, dass der Nutzer das Bedienmodul einer Halterung entnehmen kann und eine Bedienung des Krans bzw. des Arbeitsgeräts aus einiger Entfernung, beispielsweise einigen Metern, vornimmt. Hierbei kann auch vorgesehen werden, bei in dem Kran bzw. Arbeitsgerät verbauten Kameras oder Sensoren, die von diesen erfassten Video- bzw. Sensorsignale an den mobilen Controller zu übertragen und über das Display des Bedienmoduls anzuzeigen.

### Bezugszeichenliste

- 1 - 8: Verfahrensschritte
- 9: Bedienmodul
- 10: Mobiles Endgerät 10 zentrales Steuergerät 11
- 11: Zentrales Steuergerät
- 12: elektronische Anzeigeeinheit
- 13-1 - 13-6, 34: Bedienelemente
- 14: Mikrokontroller
- 15: CAN-Schnittstelle
- 16: Speicher
- 17: Kommunikationseinheit zur drahtlosen Kommunikation
- 18: Piezoaktuator
- 19: Kommunikationseinheit zur drahtlosen Kommunikation
- 20: Mikrokontroller
- 21: Speicher
- 22: Benutzerschnittstelle
- 23-2, 23-4, 23-6: Einstellungen für Bedienelemente
- 24: Datenbank mit Einstellungen für Bedienelemente
- 25: Frontabdeckung des Bedienmoduls
- 26: Stege
- 27: Frontblende
- 28: Klebstoffschicht
- 29: Leiterplatte
- 30: Hebelmechanismus
- 31: Hauptplatine
- 32: Rückseitige Abdeckung des Bedienmoduls
- 33: Gehäuse
- 35: Logo des ausgewählten Bedienelements
- 36 - 40: Icons

## Patentansprüche

1. Verfahren zur Programmierung eines Bedienmoduls für ein Fahrzeug, wobei das Bedienmodul mehrere Bedienelemente aufweist und den Bedienelementen unterschiedliche Funktionen des Fahrzeugs zugeordnet werden können, mit den folgenden in dem Bedienmodul ausgeführten Schritten:
- Empfangen (1) einer Information über die im Fahrzeug verfügbaren Funktionen und/oder den aktuellen Status des Fahrzeugs von einem zentralen Steuergerät des Fahrzeugs;
- Übermitteln (2) der empfangenen Information an ein externes Gerät über eine drahtlose Verbindung;
- Empfangen (3) von Konfigurationsdaten zur Programmierung des Bedienmoduls von dem externen Gerät über die drahtlose Verbindung; und
- Konfigurieren (4) des Bedienmoduls basierend auf den empfangenen Konfigurationsdaten.

2. Verfahren nach Anspruch 1, wobei die Konfigurationsdaten von einem mobilen Endgerät eines Fahrzeugnutzers empfangen werden.

3. Verfahren nach Anspruch 1 oder 2, wobei entsprechend der empfangenen Konfigurationsdaten einem Bedienelement eine von mehreren unterschiedlichen Funktionen und/oder Anzeigen und/oder haptischen Rückmeldungen zugeordnet wird

4. Verfahren nach Anspruch 3, wobei eine Anzeige von Bedienelementen auf einem Display des Bedienmoduls entsprechend der empfangenen Konfigurationsdaten erfolgt und die Bedienelemente als Bildsymbole dargestellt werden, die eine dem jeweiligen Bedienelement zugeordnete Funktion wiedergeben.

5. Verfahren nach Anspruch 4, wobei die Konfigurationsdaten ein von dem Fahrzeugnutzer erstelltes Bildsymbol für ein Bedienelement enthalten, welches für das Bedienelement auf dem Display dargestellt wird.

6. Verfahren nach Anspruch 4 oder 5, wobei die Konfigurationsdaten eine von dem Fahrzeugnutzer festgelegte Position auf dem Display für ein Bildsymbol enthalten und das Bildsymbol an dieser Position auf dem Display dargestellt wird.

7. Verfahren zur Programmierung eines Bedienmoduls für ein Fahrzeug nach Anspruch 1, mit den folgenden in dem externen Gerät ausgeführten Schritten:
- Empfangen (5) einer Information über die im Fahrzeug verfügbaren Funktionen und/oder den aktuellen Status des Fahrzeugs von dem Bedienmodul über eine drahtlose Verbindung;
- Erfassen (6) von Nutzereingaben eines Fahrzeugnutzers zur Programmierung des Bedienmoduls;
- Erzeugen (7) von Konfigurationsdaten zur Programmierung des Bedienmoduls basierend auf den erfassten Nutzereingaben;
- Übermitteln (8) der Konfigurationsdaten an das Bedienmodul über die drahtlose Verbindung.

8. Verfahren nach Anspruch 7, wobei die Nutzereingaben für ein Bedienelement eine Zuordnung von einer von mehreren unterschiedlichen Funktionen und/oder Anzeigen und/oder haptischen Rückmeldungen umfassen.

9. Verfahren nach Anspruch 7 oder 8, wobei die Nutzereingaben für eine Anzeige von Bedienelementen auf einem Display des Bedienmoduls ein von dem Fahrzeugnutzer erstelltes Bildsymbol für ein Bedienelement und/oder eine von dem Fahrzeugnutzer festgelegte Position auf dem Display für ein Bildsymbol enthalten.

10. Verfahren nach Anspruch 8, 9 oder 10, wobei auf einem Display des externen Geräts für ein Bedienelement eine Funktionszuordnung, ein Logo, Parameter für ein haptisches Feedback und/oder eine Vorschau für die Darstellung der Bildsymbole auf dem Display des Bedienmoduls angezeigt wird.

11. Bedienmodul für ein Fahrzeug, wobei das Bedienmodul mehrere Bedienelemente aufweist und den Bedienelementen unterschiedliche Funktionen des Fahrzeugs zugeordnet werden können, mit
- einer Betätigungseinheit (12) zur Betätigung von einem der mehreren Bedienelemente;
- einer elektronischen Anzeigeeinheit (12) zum Darstellen einer den Bedienelementen zugeordneten Anzeige;
- einem Stellglied (18) zur Erzeugung einer haptischen Rückmeldung in Reaktion auf eine Betätigung der Betätigungseinheit;
- einer Kommunikationseinheit (17) mit einer drahtlosen Schnittstelle, mittels der eine von einem zentralen Steuergerät des Fahrzeugs empfangene Information über die im Fahrzeug verfügbaren Funktionen und/oder den aktuellen Status des Fahrzeugs an ein externes Gerät übermittelt werden und eine Konfiguration zur Programmierung des Bedienmoduls von dem externen Gerät empfangen werden kann; und
- einer Steuereinheit (14), mittels der eine Programmierung des Bedienmoduls basierend auf einer empfangenen Konfiguration erfolgt und mittels der nach der Programmierung bei einer Betätigung der Betätigungseinheit je nach betätigtem Bedienelement ein elektrisches Steuersignal für eine gemäß der Programmierung zugeordnete Funktion erzeugt wird.

12. Bedienmodul nach Anspruch 11, wobei die Betätigungseinheit und die elektronische Anzeigeeinheit integriert als berührungsempfindlicher Bildschirm (12) ausgestaltet ist und die Betätigung der Bedienelemente; durch einen Fahrzeugnutzer mittels einer Berührung des berührungsempfindlichen Bildschirms erfolgt.

13. Bedienmodul nach Anspruch 11 oder 12, wobei die elektronische Anzeigeeinheit (12) als OLED-, MicroLED- oder LCD-Display und/oder das Stellglied (18) zur Erzeugung einer haptischen Rückmeldung als Piezoaktuator, Vibrationsmotor oder ein anderes mechanisch verformbares Element ausgestaltet ist.

14. Bedienmodul nach einem der Ansprüche 11 bis 13, wobei die Kommunikationseinheit eine WiFi-Kommunikationseinheit und/oder eine Bluetooth- Kommunikationseinheit und/oder eine andere kabellose Kommunikationseinheit umfasst.

15. Computerprogramm zum Durchführen eines Verfahrens nach einem der Ansprüche 1 bis 10.

## Claims

1. Method for programming an operating module for a vehicle, wherein the operating module has a plurality of operating elements and different functions of the vehicle can be assigned to the operating elements, the method comprising the following steps carried out in the operating module:
- receiving (1) information about the functions available in the vehicle and/or the current status of the vehicle from a central control unit of the vehicle;
- transmitting (2) the received information to an external device via a wireless connection;
- receiving (3) configuration data for programming the operating module from the external device via the wireless connection; and
- configuring (4) the operating module based on the received configuration data.

2. Method according to claim 1, wherein the configuration data are received from a mobile terminal of a vehicle user.

3. Method according to claim 1 or 2, wherein one of a plurality of different functions and/or displays and/or kinds of haptic feedback is assigned to an operating element in accordance with the received configuration data

4. Method according to claim 3, wherein operating elements are displayed on a display of the operating module in accordance with the received configuration data, and the operating elements are shown as icons which represent a function assigned to the relevant operating element.

5. Method according to claim 4, wherein the configuration data contain an icon for an operating element, which icon is generated by the vehicle user and shown for the operating element on the display.

6. Method according to claim 4 or 5, wherein the configuration data contain a position on the display, specified by the vehicle user, for an icon, and the icon is shown at this position on the display.

7. Method for programming an operating module for a vehicle according to claim 1, comprising the following steps carried out in the external device:
- receiving (5) information about the functions available in the vehicle and/or the current status of the vehicle from the operating module via a wireless connection;
- detecting (6) user inputs by a vehicle user for programming the operating module;
- generating (7) configuration data for programming the operating module based on the detected user inputs;
- transmitting (8) the configuration data to the operating module via the wireless connection.

8. Method according to claim 7, wherein the user inputs for an operating element comprise an assignment of one of a plurality of different functions and/or displays and/or kinds of haptic feedback.

9. Method according to claim 7 or 8, wherein the user inputs for displaying operating elements on a display of the operating module contain an icon, generated by the vehicle user, for an operating element, and/or a position on the display, specified by the vehicle user, for an icon.

10. Method according to claim 8, 9 or 10, wherein a function assignment, a logo, parameters for haptic feedback and/or a preview for showing the icons on the display of the operating module is displayed on a display of the external device for an operating element.

11. Operating module for a vehicle, wherein the operating module has a plurality of operating elements and different functions of the vehicle can be assigned to the operating elements, comprising
- an actuating unit (12) for actuating one of the plurality of operating elements;
- an electronic display unit (12) for showing a display assigned to the operating elements;
- an actuator (18) for generating haptic feedback in response to actuation of the actuating unit;
- a communication unit (17) having a wireless interface, by means of which the information received from a central control unit of the vehicle regarding the functions available in the vehicle and/or the current status of the vehicle can be transmitted to an external device, and a configuration for programming the operating module can be received from the external device; and
- a control unit (14), by means of which the operating module is programmed based on a received configuration and by means of which, after programming, upon actuation of the actuating unit, an electrical control signal is generated for a function assigned according to the programming, depending on the actuated operating element.

12. Operating module according to claim 11, wherein the actuating unit and the electronic display unit are designed to be integrated as a touch-sensitive screen (12), and the operating elements are actuated by a vehicle user by means of touching the touch-sensitive screen.

13. Operating module according to claim 11 or 12, wherein the electronic display unit (12) is designed as an OLED, MicroLED or LCD display and/or the actuator (18) for generating haptic feedback is designed as a piezo actuator, vibration motor or another mechanically deformable element.

14. Operating module according to any of claims 11 to 13, wherein the communication unit comprises a WiFi communication unit and/or a Bluetooth communication unit and/or another wireless communication unit.

15. Computer program for executing a method according to any of claims 1 to 10.

## Revendications

1. Procédé pour la programmation d'un module de manipulation pour un véhicule, dans lequel le module de manipulation présente plusieurs éléments de manipulation et différentes fonctions du véhicule peuvent être attribuées aux éléments de manipulation, comportant les étapes suivantes exécutées dans le module de manipulation :
- réception (1) d'informations concernant les fonctions disponibles dans le véhicule et/ou l'état actuel du véhicule en provenance d'un appareil de commande central du véhicule ;
- transmission (2) des informations reçues à un appareil externe par l'intermédiaire d'une connexion sans fil ;
- réception (3) de données de configuration pour la programmation du module de manipulation en provenance de l'appareil externe par l'intermédiaire de la connexion sans fil ; et
- configuration (4) du module de manipulation sur la base des données de configuration reçues.

2. Procédé selon la revendication 1, dans lequel les données de configuration sont reçues en provenance d'un terminal mobile d'un utilisateur du véhicule.

3. Procédé selon la revendication 1 ou 2, dans lequel, en fonction des données de configuration reçues, un élément parmi plusieurs fonctions et/ou affichages et/ou retours haptiques différents est attribué à un élément de manipulation

4. Procédé selon la revendication 3, dans lequel un affichage d'éléments de manipulation est effectué sur un écran du module de manipulation en fonction des données de configuration reçues et les éléments de manipulation sont représentés sous forme de symboles qui reproduisent une fonction attribuée à l'élément de manipulation respectif.

5. Procédé selon la revendication 4, dans lequel les données de configuration comprennent un symbole créé par l'utilisateur du véhicule pour un élément de manipulation, lequel symbole est affiché sur l'écran pour l'élément de manipulation.

6. Procédé selon la revendication 4 ou 5, dans lequel les données de configuration comprennent une position sur l'écran définie par l'utilisateur du véhicule pour un symbole, et le symbole est affiché à ladite position sur l'écran.

7. Procédé pour la programmation d'un module de manipulation pour un véhicule selon la revendication 1, comportant les étapes suivantes exécutées dans l'appareil externe :
- réception (5), en provenance du module de manipulation par l'intermédiaire d'une connexion sans fil, d'informations concernant les fonctions disponibles dans le véhicule et/ou l'état actuel du véhicule ;
- détection (6) d'entrées utilisateur d'un utilisateur du véhicule pour la programmation du module de manipulation ;
- génération (7) de données de configuration pour la programmation du module de manipulation sur la base des entrées utilisateur détectées ;
- transmission (8) des données de configuration au module de manipulation par l'intermédiaire de la connexion sans fil.

8. Procédé selon la revendication 7, dans lequel les entrées utilisateur pour un élément de manipulation comprennent une attribution d'un élément parmi plusieurs fonctions et/ou affichages et/ou retours haptiques différents.

9. Procédé selon la revendication 7 ou 8, dans lequel les entrées utilisateur pour un affichage d'éléments de manipulation sur un écran du module de manipulation comprennent un symbole créé par l'utilisateur du véhicule pour un élément de manipulation et/ou une position sur l'écran définie par l'utilisateur du véhicule pour un symbole.

10. Procédé selon la revendication 8, 9 ou 10, dans lequel une attribution de fonction, un logo, des paramètres pour un retour haptique et/ou un aperçu pour la représentation des symboles sur l'écran du module de manipulation sont affichés sur un écran de l'appareil externe pour un élément de manipulation.

11. Module de manipulation pour un véhicule, dans lequel le module de manipulation présente plusieurs éléments de manipulation et différentes fonctions du véhicule peuvent être attribuées aux éléments de manipulation, comportant
- une unité d'actionnement (12) pour l'actionnement d'un élément de manipulation parmi les éléments de manipulation ;
- une unité d'affichage électronique (12) pour la représentation d'un affichage associé aux éléments de manipulation ;
- un actionneur (18) pour la génération d'un retour haptique en réponse à un actionnement de l'unité d'actionnement ;
- une unité de communication (17) comportant une interface sans fil, au moyen de laquelle des informations reçues en provenance d'un appareil de commande central du véhicule et concernant les fonctions disponibles dans le véhicule et/ou l'état actuel du véhicule peuvent être transmises à un appareil externe et une configuration pour la programmation du module de manipulation peut être reçue en provenance de l'appareil externe ; et
- une unité de commande (14) au moyen de laquelle est effectuée une programmation du module de manipulation sur la base d'une configuration reçue et au moyen de laquelle, après la programmation, lors d'un actionnement de l'unité d'actionnement, un signal de commande électrique est généré en fonction de l'élément de manipulation actionné pour une fonction attribuée selon la programmation.

12. Module de manipulation selon la revendication 11, dans lequel l'unité d'actionnement et l'unité d'affichage électronique sont conçues de manière à être intégrées en tant qu'écran tactile (12) et l'actionnement des éléments de manipulation est effectué par un utilisateur du véhicule au moyen d'un contact sur l'écran tactile.

13. Module de commande selon la revendication 11 ou 12, dans lequel l'unité d'affichage électronique (12) est conçue comme un écran OLED, MicroLED ou LCD et/ou l'actionneur (18) pour la génération d'un retour haptique est conçu comme un actionneur piézoélectrique, un moteur vibrant ou un autre élément mécaniquement déformable.

14. Module de manipulation selon l'une des revendications 11 à 13, dans lequel l'unité de communication comprend une unité de communication par Wi-Fi et/ou une unité de communication par Bluetooth et/ou une autre unité de communication sans fil.

15. Produit-programme informatique pour la mise en œuvre d'un procédé selon l'une des revendications 1 à 10.
